(19) Europäisches Patentamt
European Patent Office
Office européen des brevets

(11) EP 0 785 555 A1

(12) EUROPEAN PATENT APPLICATION

(43) Date of publication:
**23.07.1997 Bulletin 1997/30**

(21) Application number: **96114737.8**

(22) Date of filing: **13.09.1996**

(51) Int. Cl.[6]: **G11B 27/36**, G11B 20/18, G01B 7/34, G01R 33/12, G11B 5/39

(84) Designated Contracting States:
**DE FR GB**

(30) Priority: **22.01.1996 US 589674**

(71) Applicant: **Hewlett-Packard Company
Palo Alto, California 94304 (US)**

(72) Inventors:
- **Davis, Bradley K.
Meridian, Idaho 83642 (US)**
- **Eldredge, Kenneth J.
Boise, Idaho 83709 (US)**

(74) Representative: **Schoppe, Fritz, Dipl.-Ing.
Patentanwalt,
P.O. Box 71 08 67
81458 München (DE)**

# (54) Apparatus and method for thermal asperity detection and failure prediction in disk drive systems

(57) A thermal asperity detector (45) identifies thermal asperities resulting from head (38) to disk (14-17) contacts on a computer disk drive system (10). A dual stripe magnetoresistive (DSMR) head (38) having a pair of read head elements (50,52) is provided for reading data on a disk (14-17) to be read. The head (38), in combination with a differential amplifier (68) provided in conjunction therewith, rejects fluctuations in a read signal of each head. The fluctuations appear as common mode, and result from thermal asperities. Due to the common mode rejection properties of the DSMR head (38), the thermal asperity component of the signals is largely attenuated. A discriminating circuit (44,144) receives a detected read signal from each head element, and monitors a comparative signal of the read signals to determine thermal asperities. In one version, the discriminating circuit is a common mode preamplifier (44), and the comparative signal is a common mode signal. In another version, the discriminating circuit is a differential input preamplifier (144), and the comparative signal is a differential signal.

HUS
RDX
RDY
OSCILLOSCOPE
63
44
KWX
KWY
WRITE DRIVER CKTS
54
WDIX
WDIY
66
HEAD UNSAFE DETECTOR
62
COUNTER
PREAMP INTERFACE
HUS
SEN
SCLK
SDATA
R/WN
VCC
GND
RDX
RDY
38
58
Vcc
THERMAL ASPERITY DETECTOR
42
48
70
72
50
53
52
KRX
KGR
KRY
59
64
65
56
60
A1
68

EP 0 785 555 A1

## Description

### FIELD OF THE INVENTION

This invention relates to a thermal asperity detector and method for detecting thermal asperities resulting from read head to disk contacts on a disk drive system of a data storage device.

### BACKGROUND OF THE INVENTION

Computer hard disk drive systems are available in a wide variety of configurations which enable a broad range of storage capacities for information stored on a disk. Conventional computer disk drives have a pivoting support arm that movably carries one or more actuator arms relative to one or more corresponding rotatable magnetic disks. Typically, both the top and bottom surfaces of each hard drive are configured to store tracks of information in the form of magnetic media provided on a surface of the hard disk. Hence, each surface provides a unique data storage device. The support arm, carrying a comb-like array of actuator arms, is pivoted into position with a rotary servo motor. Each actuator arm extends across the disk to position a magnetic head radially over concentric data tracks in the disk pursuant to position commands received from a drive controller operating as a closed loop servo control system.

This invention relates to the problems associated with thermal asperities caused by head-disk contact, head-particle contact, and head mismatch of the head-disk interface. A thermal asperity is produced when the head contacts the disk being read, briefly causing the head to heat quickly due to friction. The detection and tracking of thermal asperities can indicate impending failure or the condition of the head media interface. Therefore, it is desirable to monitor thermal asperities (TA's). Typically, a dual-stripe magnetoresistive head (DSMR) is used on a disk drive system in combination with a differential preamplifier to remove TA's. A DSMR head when used in combination with a differential preamplifier provides a large degree of rejection to thermal asperities. A thermal asperity causes both elements to heat up, quickly increasing the temperature of each element. The head, which is integrated into a component called the slider, cools off depending upon the thermal path out of the head and slider body. The slider is formed from a specially contoured piece of the head wafer that flies only nanometers above the disk. The head and preamplifier in these devices are configured to reject most thermal asperities. Therefore, it becomes difficult, if not impossible to monitor thermal asperities by monitoring the output of the preamplifier for a DSMR head.

Each disk surface can magnetically carry servo position information and/or read/write data. Where both are present, the DSMR head forms an embedded servo disk drive system. Where one disk surface in a stack is dedicated solely to servo position information, the DSMR head forms a dedicated servo disk drive system. In either case, the servo position information is used to control and synchronize operation of the magnetic disk(s) and to position the read/write head(s).

Alternatively, single stripe heads were used to read/write data to disks. However, thermal asperities detected by a single stripe head are completely differential in mode. Therefore, signals from a single stripe head cannot be separated from the signal by using the command mode component.

This invention relates to a dual-stripe magnetoresistive (DSMR) head and circuitry assembly which overcomes the above drawbacks. The circuitry of this invention significantly improves rejection of thermal asperities, while still enabling detection and tracking of thermal asperities of the head-disk interface. Read signals from the DSMR head are substantially clean of fluctuations from thermal asperities due to properties of the circuitry. Additionally, the circuitry provides a significant representation of the thermal asperity as an output usable for detection and performance of diagnostics. Furthermore, this invention relates to a method of performing the above detection.

### SUMMARY OF THE INVENTION

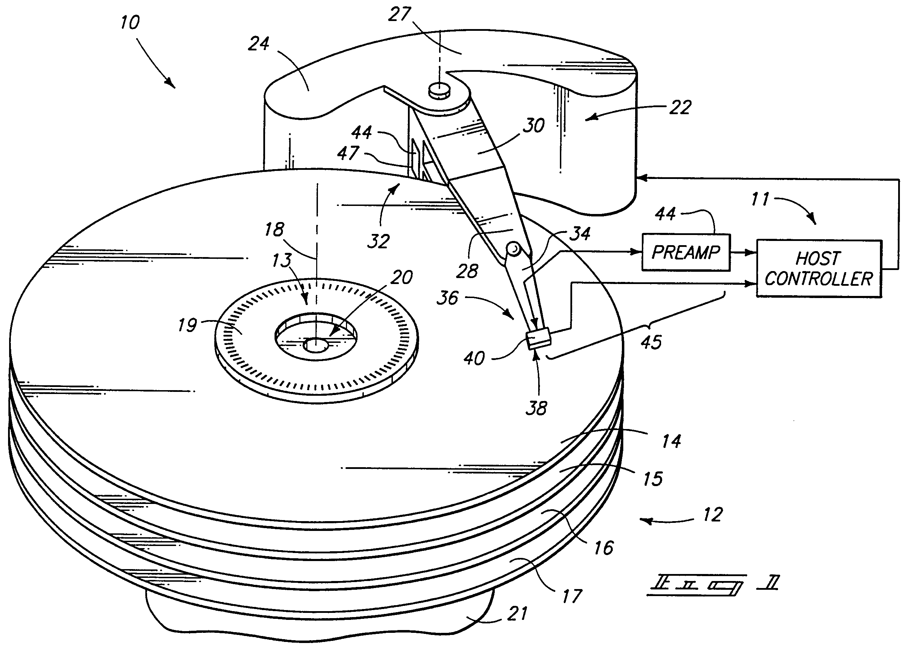

According to one aspect of this invention, a thermal asperity detector identifies thermal asperities resulting from head to disk contacts on the computer disk drive system shown in Figure 1. A dual stripe magnetoresistive (DSMR) head having a pair of read head elements is provided for reading data on a disk to be read. The head, in combination with a differential input preamplifier provided in conjunction therewith, rejects fluctuations in a read signal of each head. The fluctuations appear as common mode, and result from thermal asperities. Due to the common mode rejection properties of the DSMR head, the thermal asperity component of the signals is largely attenuated. A discriminating circuit receives a detected read signal from each head element, and monitors a comparative signal of the read signals to determine thermal asperities. In one version, the discriminating circuit is a common mode preamplifier, and the comparative signal is a common mode signal. For such a case of a dual stripe magnetoresistive head, the thermal asperity is a common mode signal which is produced in both head elements, or stripes, in approximately the same magnitude and phase. In another version, the discriminating circuit is a differential input preamplifier, and the comparative signal is a differential signal. The head elements cool at a rate determined by the thermal conductance environment of the head. Since both head elements are made of the same material and possess the same temperature dependence of resistance, transient variations of the element temperature result in variations in the resistance of each element. In contrast, thermal asperities detected by a single stripe head are completely differential in mode. Therefore, data signals from single stripe heads cannot be separated from the asperity signal by using the command mode component.

According to another aspect, a method is taught for electrically detecting thermal asperities between a dual stripe magnetoresistive (DSMR) read head element and a disk drive system. A detected read signal is received from each head element of a pair of head elements on the DSMR head. The read signal is presented from each head element to a discriminating circuit for evaluating a thermal asperity. Subsequently, a thermal asperity is detected with the discriminating circuit. According to one method, a common mode amplifier forms the discriminating circuit, the amplifier monitoring a common mode signal of the detected read signals. According to another method, a differential input preamplifier forms the discriminating circuit, the amplifier monitoring a differential signal of the detected read signals.

DESCRIPTION OF THE DRAWINGS

Preferred embodiments of the invention are described below with reference to the following accompanying drawings depicting examples embodying the best mode for practicing the invention.

Fig. 1 is a diagrammatical perspective view of a computer disk drive system including a thermal asperity detector of this invention.

Fig. 2 is a simplified block diagram of the present invention of the asperity discriminating circuit and method of the present invention.

Fig. 3 is a block diagram illustrating a common mode preamplifier implementation of a discriminating circuit.

Fig. 4 is a block diagram illustrating a differential input preamplifier implementation of a discriminating circuit.

DETAILED DESCRIPTION OF THE INVENTION

This disclosure of the invention is submitted in furtherance of the constitutional purposes of the U.S. Patent Laws "to promote the progress of science and useful arts". U.S. Constitution, Article 1, Section 8.

Figure 1 shows a disk drive date storage device or system 10 including a disk drive servo system or controller 11 having a stacked array 12 of multiple magnetic hard disks 14-17 aligned substantially along a central axis of rotation 18. The magnetic disks 14-17 have associated, centrally located hubs (referenced generally by numeral 13) and are separated from one another by interposed spacers. The magnetic disks 14-17 are rotatably carried by a stationary support, or frame 21 via a spindle assembly 20 empowered for rotatable motion by a motor or other drive mechanism (not shown) to spin about axis 18 at a substantially constant operating speed. The spindle assembly includes a top clamp 19 for retaining the disk 14-17 in rotationally fixed relation with interleaved adjacent disks and interposed spacers along associated disk hubs 13. Details of the spindle assembly and a portion of the support supporting the disk array are of a conventional design and are therefore not described herein in any detail except as necessary to describe the present invention. A head/arm assembly 22 is rotatably positioned adjacent to the stacked disk array 12 by way of a servo motor 24 configured to rotatably position the assembly relative to a fixed support member 26. The head/arm assembly includes a support arm 28 formed by a comb-like array of individual carrier arms 30 carried by the support member 26 and accurately positioned for rotation by activation of the servo motor 24 relative to support member 26 and array 12. The support arm 28 is typically of a two-part construction including carrier arm 30, defining a proximal end 32, and a suspension member 34 that is swaged, spot welded, or otherwise fastened to the arm portion to define the distal end 36.

A dual stripe magnetoresistive (DSMR) head 38 is mounted on a slider 40 at distal end 36 of the suspension member 34. In operation, the head 38 communicates with a preamplier 44 (depicted in block diagram form and actual form in Figure 1) carried on arm 30. Preamplifier 44 is formed as a semiconductor chip 47 mounted directly to arm 30, and connected to head 38 by conductive lines (not shown). Head 38 and preamplifier 44 cooperate to form a thermal asperity detector 45. An inductive write head element is also included on head 38. The support arm is pivotally connected relative to the disk drive data storage device 10 at a location spaced from the slider 40 which allows for rotational positioning of the DSMR head 38 and inductive head element over a corresponding surface of the hard disk. DSMR head 38 is formed by a gimble assembly including a slider physically connected via a gimble mount to carrier arm 30, with head 38 installed on the slider. Similarly, other read/write heads (not shown) are mounted on similarly situated support arms 28 aligned beneath the arm 28 as depicted in Figure 1 such that one or two arms are provided for each magnetic disk 14-17. Only one support arm 30 is completely shown in Figure 1, wherein a DSMR head 38 is mounted on slider 40 at the distal end to read information and to detect positioning of the head with respect to embedded servo information. Similarly, the other support arms are aligned directly beneath arm 28. The rotatable support arms are thereby movable relative to storage disks 14-17 such that positioning of DSMR head 38 likewise rotatably positions each respective read/write head and support arm through motion of servo motor 24. The read/write heads magnetically read/record information from/to corresponding surfaces on storage hard disks 14-17 during operation. According to this arrangement, the carrier arm 30 integrally forms the base of each support arm 28. Hence, the carrier arm 30 supports and radially positions the read/write heads across a surface of each disk 14-17 as the support arms 28 are controllably rotated about axis 27. The slider and arm rotate the DSMR head 38 to align the head with each data track. When a support arm and a head are rotated bringing the head across the full range of tracks on a disk, the head will cross each of the tracks at varying angles depending on the radial position along the disk due to the arcuate path motion of the head as it rotates across the surface of the disk. In the past, for earlier designs that had a head rigidly fixed to the arm, data tracks had to be spaced apart a greater distance in order to reduce the effects of this head skew problem. However, the need to provide as much data storage on as many tracks as possible on a particular disk surface required that the heads be aligned with the tracks as they rotate.

The servo motor 24 depicted in Figure 1 moves the DSMR heads 38 in response to control commands from host controller 11. Controller 11, by way of a feedback loop, moves the heads to desired locations on surfaces of disks 14-17. For the case of an embedded servo disk drive, a position map is read by the servo head 38 in the form of servo position information prerecorded onto the surfaces of each disk. The servo controlled motor 24 is carried in association with the support arm 28, and is constructed and arranged to actuate rotatable positioning of the support arm and the head to a desired track on the surface of the hard disk 14.

DSMR head 38 is a thin film head that is mounted onto an aerodynamic slider forming part of the servo head gimble assembly. The slider is physically connected via a gimble mount to the actuator arm 30 and the servo head 38. The slider forms a flying head that eliminates head wear and disk abrasion by floating the servo head a few millionths of an inch from the disk surface on a thin cushion of air produced by the rapidly spinning array 12. For the case of an embedded servo disk drive system, the servo head is formed by the read portion of a read/write head. Each disk has thin "pie-shaped" slices reserved for servo information interspersed between larger "pie-shaped" regions for data storage. Alternatively, dedicated servo disk drive systems have a dedicated head configured to read corresponding servo data from a dedicated surface of a disk. Furthermore, the slider supporting the head can be formed from a substrate which supports two separate elements: the read head and the write head, wherein the read head is used in an alternating, or intermittent manner as the servo head. In another construction, the read and write heads can be placed on a single chip provided on a common slider, or substrate which is then glued to a metal flexure similar to suspension member 34. In both cases, servo head 38 must be moved slightly in the radial direction an offset amount to account for the lateral distance between the assembled read and write heads when operating between read and write modes so as to maintain positioning of each head atop a desired track as it is being written to/read from, correspondingly.

For the case where magnetic disks 14-17 of Figure 1 are implemented in an embedded servo disk drive configuration, many concentric embedded tracks are provided on the sides of each disk for storing data and servo information. For this case, tracks in this implementation are divided into numerous circumferentially spaced regions or sectors. The regions or sectors of disks 14-17 when configured in the embedded configuration can be generally classified as data segments and "inter-sector" servo gaps. The data segments are relatively large pie-shaped wedges which store reported bits of data within tracks. The servo gaps are analogous to the unmagnetized spaces formed when imparting servo information to the disk surface of a dedicated hard drive. Each servo gap is a relatively small pie-shaped region interspersed between data segments for storing some tracking information within tracks.

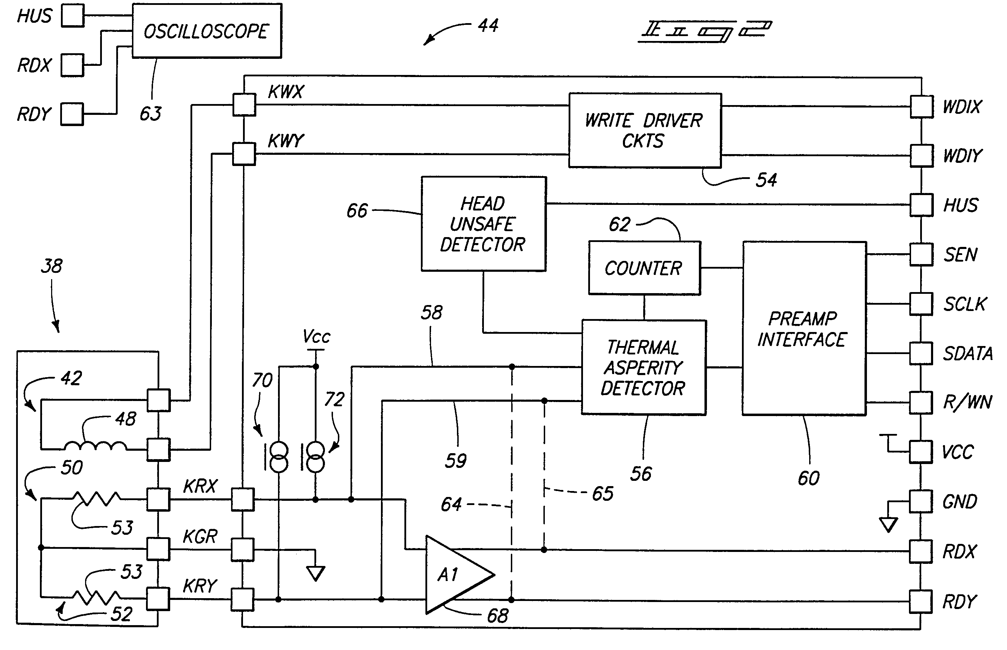

As shown in Figure 2, head 38 is a dual stripe magnetoresistive (DSMR) head having a pair of current-carrying Hall plates. The plates, or stripes change in resistance when acted upon by a magnetic field imparted by the regions forming a data track on a disk. Each stripe forms a read head element 50 and 52 that senses data on a track being read. The head elements 50 and 52 are each formed from a resistor 53, with the resistor of each element being differentially biased by the magnetic field from the current in the other element, or stripe. A magnetoresistive head element (of a current carrying device) changes in resistance when acted on by a magnetic field. Depending on the element configuration, the magnetic field increases or decreases in element resistance. For the DSMR head element, one element increases while the other decreases in resistance in response to an applied magnetic field. Additionally, an inductive write head element 42 is configured to enable writing information to the data tracks on each disk.

According to Figure 2, preamplifier 44 functions as a discriminating circuit, receiving detected read signals from each of the magnetoresistive read head elements 50 and 52 on DSMR head 38. Additionally, preamplifier 44 transmits current to write head element 46 when operating in a write mode. In addition to reading data signals when operating in the read mode, the preamplifier is also used to detect and track thermal asperities of the head-disk interface. In this embodiment, preamplifier 44 implements common mode thermal asperity detection. Additionally, the host controller 11 communicates via the preamplifier 44 with the read and write head elements 50, 52 and 46, respectively. Furthermore, host controller 11 forms the disk drive servo control system that directs positioning of head 38 over desired data tracks.

As shown in Figure 2, DSMR head 38 has an inductive write head 42 in addition to the pair of read head elements, or stripes 50. Write head 42 is formed by an inductor 48 electrically connected with write driver circuits 54. When in write mode, circuits 54 direct operation of head 42. Various designs for suitable write driver circuits are readily understood in the art, any one of which would be suitable for use with this device.

For purposes of simplified illustration, only a single DSMR read/write head 38 is shown in Figure 2. However, a "K" plurality of heads 38 are typically utilized, where K corresponds to the number of disk surfaces in a stacked disk array. For example, a ten disk array would have twenty heads 38, each adjacent to a respective disk surface. Accordingly, with respect to each connecting signal line, the "K" prefix (i.e. KRX, KRY, KGX, KWX, and KWY) is used to indicate the head 38 in the disk array. More particularly, the read head connections are KRX, KRY, and KGR, and the write head connections are KWX and KWY.

Before describing in greater detail the apparatus and methods of this invention, it should be understood that the input and output signals of preamplifier 44 include but are not limited to the following:

WDIX and WDIY are differential write data input signals.
HUS is a head unsafe signal for inhibiting read and write signal functions to the heads when the heads are unsafe for activity.
SEN is the serial bus enable.
SCLK is the serial bus clock.
SDATA is the serial bus data line.
R/WN is the read/write selection, where "read" mode is a high signal and "write" mode is a low signal.
VCC is the supply voltage, e.g. five (5) volts.
GND is the preamplifier signal ground.
RDX and RDY are the normal "read" output signals.

Referring in greater detail to Figure 2, read head elements 50 and 52 of DSMR head 38 are electrically coupled to preamplifier 44 via read head connections KRX and KRY, with a ground connection being made via connection KGR. A magnetoresistive bias current is applied via current sources 70 and 72 to the signal from each read head element 50 and 52, respectively.

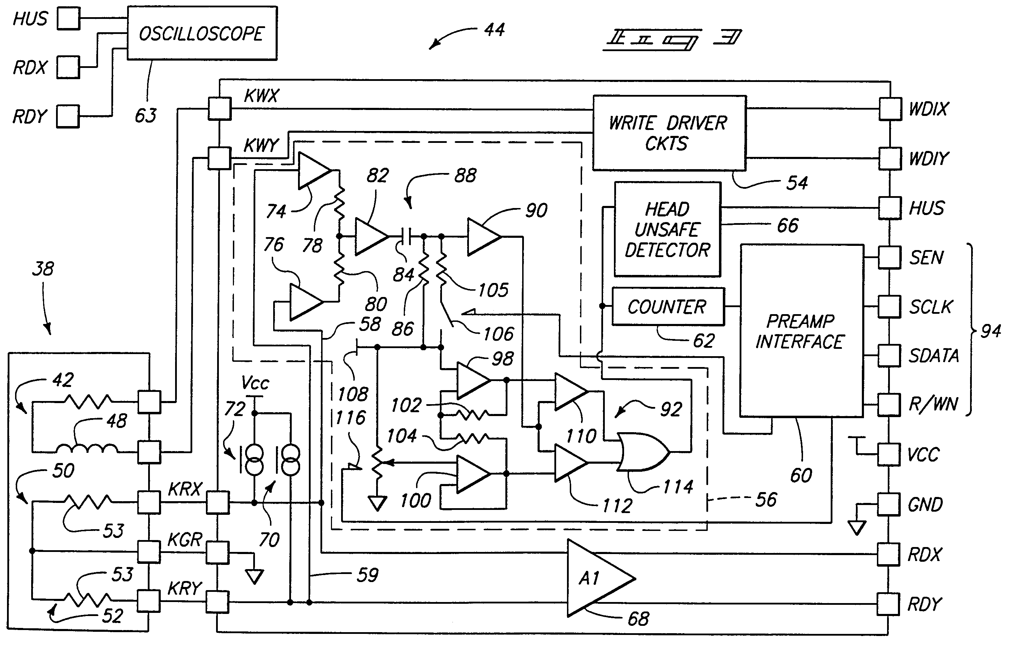

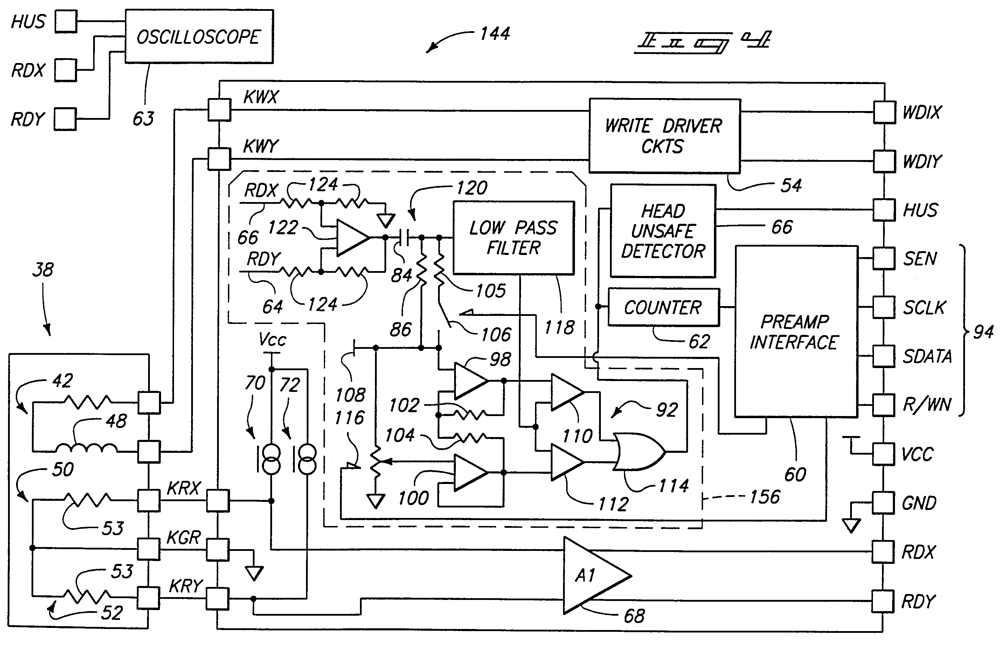

In the device of Figure 2, also shown in greater detail in Figure 3 below, conductive leads 58 and 59 connect each read head element 50 and 52 with a thermal asperity detector 56. Detector 56 creates an alternative mode (to that provided at RDX and RDY) in which the signal (current) at the non-grounded end of elements 50 and 52 is monitored and processed in a discriminator circuit. The normal read signal still comes out RDX and RDY, where a differential amplifier 68 amplifies the differential input signal from elements 50 and 52 and attenuates the common mode signal therebetween. When configured with leads 58 and 59, preamplifier 44 implements detector 56 to perform common mode thermal asperity detection, as described in further detail with reference to Figure 3. Optionally, conductive leads 64 and 65 replace leads 58 and 59 in an alternative embodiment of detector 156 depicted in Figure 4, where a fully amplified differential signal is filtered to adjust the thermal asperity signal "baseline". The signal is then centered in a window and detected, according to the optional implementation described below. Detectors 56 and 156 comprise a window comparator for evaluating a processed signal.

In both embodiments of Figure 2, a counter 62 enables counting the occurrence of thermal asperities for diagnostics, defect monitoring, and monitoring rate of occurrence. For example, the head unsafe signal (HUS) can be delivered to a digital oscilloscope 63 (or other diagnostic instrument) for detection, analysis, and/or triggering. Alternatively, controller 11 can internally monitor the HUS. Additionally, head unsafe detection circuits 66 enable the detection of unsafe conditions at the head/disk interface, allowing for responsive action to be taken. Furthermore, a preamplifier interface 60 provides a configuration interface and control logic for signals provided by counter 62 and detector 56.

According to Figure 3, thermal asperity detector 56 implements an arithmetic averaging of the common mode component of signals from elements 50 and 52. Buffers 74 and 76 and resistors 78 and 80 are configured to arithmetically average voltages V1 and V2 along lines 58 and 59, respectively. Hence, resistors 78 and 80 are equal valued, centering the signals at (V1 + V2)/2. However, the average of the positive side of the test signals V1 and V2 will be small, requiring gain correction via amplifier 90. After the average of the two signals is created, a buffer 82 is used to buffer the resulting averaged or common mode voltage signal. In using the common mode signal, little filtering of the signal is required to strip off the baseline and eliminate normal read back data (which is nearly all differential signals) to center the common mode signal in the center of a window detector. The window detector goes off if the signal is above or below the upper and lower threshold levels. Here, the thermal asperity should be mostly common mode rather then differential, and therefore much easier to detect with this circuit implementation than if a differential output signal (RDX, RDY) were used.

A high pass filter 88 is provided by capacitor 84 and resistor 86. The common mode voltage signal is filtered by high pass filter 88 so that step changes of the common mode bias voltages 70 and 72 are filtered out. For example, step changes can occur after any transient on the element voltages, i.e. write to read transitions (when the read elements 50 and 52 are not biased while writing, then are suddenly biased when the preamplifier 44 switches to read mode). Another example occurs from head switch transitions (when the read elements are configured for an unselected channel, then are suddenly biased when the preamplifier 44 switches to activate that channel). Other events which will cause similar transient steps on common mode biase voltages 70 and 72 are SLEEP-TO-ACTIVE-READ, STANDBY-TO-ACTIVE-READ, CHANGING MR BIAS CURRENT VALUES (due to the settling procedure that directly follows these events).

High pass filter 88 is created by some effective coupling capacitor 84, and a resistance to signal reference, Vr, through resistor 86. The time constant is R*C. The lower limit of the time constant is set by the high pass filter's attenuation of the spectrum of the signals in the thermal asperity (TA) baseline, i.e. the high pass filter is filtering out the TA amplitude, making it hard to detect. The upper limit on the high pass time constant is determined by the time it takes to settle and reject step changes, i.e. Vhp(t) = Vstep*exp( RhpChp) . Typically, it is desirable to settle these step inputs as quickly as possible so that detection from the average baseline can begin. To speed settling up after the high pass filter, one could decrease this time constant by temporarily switching a low valued resistance in parallel with Rhp, e.g. Rsq 105 which is switched in for 1 to 2 microseconds after one of these transients. The preamplifier 44 knows when these transients occur because it causes them after one of the events mentioned above happens. Therefore, it can time a one-shot from these events that controls how long the high passed signal is squelched for.

Generally speaking, thermal asperities (TA's) occur in a spectrum below the data and servo signals, depending upon thermal characteristics of head 38 and the rate of heating. Rate of heating of head 38 can be affected by how steeply the head contacts the disk. Glancing contacts may heat more slowly, causing a slower TA baseline rise time, while very direct contacts, i.e. "head slaps" result in very quick heating, approximately 0.5 microseconds.

Upon high-pass filtering and settling a signal through filter 88, very little of any normal read back signal will be present. Therefore, the signal must be amplified via amplifier 90, since it will be very small coming out of head 38. Subsequently, the amplified signal is fed to a window comparator 92. Window comparator 92 has upper and lower thresholds which are programmed through a serial interface 94 so that they track symmetrically around the internal signal reference voltage, Vr. The threshold levels can be programmed to accommodate very large or small TA's. The actual threshold levels will depend on the signal amplifier and high pass gains imparted by high pass filter 88. Window comparator 92 produces an output 96 that is representative of a real-time trigger of when thermal asperities (TA's) occur. Such a trigger output can be fed to counter 62 within the semiconductor chip forming the preamplifier 44. Counter 62 is readable through serial interface 94 of chip 47 (See Fig. 1). In one implementation, counter 62 is configured to clear itself when read, and saturate when it reaches a maximum count.

According to Figure 3, trigger counter 62 may be cleared by performing a dummy read, then performing a follow-up read at the end of a sector or another time delay of interest. Such a count is indicative of the frequency of thermal asperities (TA's). If the count is non-zero yet stays relatively constant over time, presumably the head/disk interface is not degrading.

Trigger output 96 of window comparator 92 may come off chip 47 (see Fig. 1) for real-time triggering of thermal asperity (TA) events. Additionally, or alternatively, the trigger output 96 can be used for triggering TA's else where. Also, such a real-time trigger indicates the time the TA occurred within the revolution of a disk being read. This is important if it is desired to trigger an oscilloscope 63 or some other diagnostics. Such a real-time trigger is also necessary if a real-time correction scheme is employed to alleviate the affect of the thermal asperity so that it results in fewer corrupted bits. With fewer corrupted bits, data is more likely recovered by an error correction coding (ECC). One correction scheme could be a partial squelching of the channel input signal such that the highpass filter frequency in normal operation (from the preamplifier 44 to the channel) is moved up to attenuate the spectrum of the TA possibly making the length of the error caused by the TA short enough for the ECC to correct. One alternative scheme could be to squelch the input signal to the channel so as not to saturate or disturb loops and goings on in the channel. Another alternative scheme could be to add in a negative exponential to the channel's baseline signal and attempt to cancel out the thermal asperity baseline.

The above-mentioned real-time trigger can come out of the chip in several ways. One way delivers the trigger on the HUS pin. Another way delivers the trigger on a separately dedicated pin. Yet another way delivers the trigger out of the HUS pin when put in a special test mode. When placed in the special test mode, the HUS pin is not connected to the normal head unsafe features, but rather, to the real-time TA trigger. A fourth alternative is to deliver the trigger via the HUS pin while the chip is in read mode.

According to Figure 3, a switch 106 is activated for squelch purposes to speed settling of the high pass filter after receiving transients at the inputs KRX and KRY. A squelch resistor 105 decreases the time constant of the high pass filter 120. Here, reference voltage VR is an internal signal reference voltage. High gain amplifiers 98 and 100, in combination with resistors 102 and 104, deliver the internal signal reference voltage VR via a programmable threshold adjust 116 to the window comparator 92. Window comparator 92 is formed from comparators 110 and 112, and OR GATE 114. As viewed in Figures 3 and 4, amplifiers 98 and 100 and comparators 110 and 112 have an upper connection providing the positive input.

According to Figure 4, an alternative embodiment has circuitry similar to the preamplifier of Figure 3 with the exception that a thermal asperity detector 156 is configured to receive the differentially amplified signal RDX and RDY downstream of amplifier 68. Here, conductive leads 64 and 65 replace leads 58 and 59 in an alternative embodiment detector 156, where a fully amplified differential signal is filtered to adjust the thermal asperity signal "baseline". Such comprises differential thermal asperity detection, using a fully amplified differential signal. The entire circuit implementation comprises a differential input preamplifier 144 formed on chip 47 (See Fig. 1). With this implementation, data will be present on the signal at higher frequencies (in the range of 10 to 100 MHz for a high performance disk drive). Therefore, the signal should be filtered out with a low pass filter 118 so that the thermal asperity "base-line" comes through to go into window detector or comparator 92. Additionally, the signal should be centered around the reference voltage of the window comparator. However, the amplified signal causes a problem since there is a channel-to-channel offset of about 200mV. To get rid of the 200 mV DC offset, a high pass filter 120 filters the signal at a frequency below the main spectrum of the TA baseline.

For the low extreme, the high pass cutoff frequency would be well below the spectrum of the TA baseline. If that is the case, the signal doesn't return to the center reference of the window detector after receiving transients at the input. Therefore, the high pass cutoff frequency is moved up so that it overlaps the spectrum of the TA, to allow faster settling after transients. As a result, a fast recovery to the center of the window detector occurs for the average baseline, but it attenuates and distorts (differentiates) the TA baseline signal. Additionally, the differential gain signals RDX and RDY are conditioned via amplifier 124 and resistors 126, before they are input to the high pass filter 120.

In compliance with the statute, the invention has been described in language more or less specific as to structural and methodical features. It is to be understood, however, that the invention is not limited to the specific features shown and described, since the means herein disclosed comprise preferred forms of putting the invention into effect. The invention is, therefore, claimed in any of its forms or modifications within the proper scope of the appended claims appropriately interpreted in accordance with the doctrine of equivalents.

## Claims

1. A thermal asperity detector (45) for ascertaining head (38) to disk (14) contacts in a disk drive system (10), comprising:

    a dual stripe magnetoresistive head (38) having a pair of magnetoresistive head elements (50,52) configurable to read information on a desired track of a hard disk (14) of the disk drive system (10); and
    a discriminating circuit (44) configured to receive a detected read signal from each of the magnetoresistive head elements (50,52), the circuit (44) configured to determine and monitor a comparative signal of the detected read signals to determine thermal asperities from the head-disk interface apparent in the detected read signals.

2. The detector of claim 1 wherein the discriminating circuit (44) comprises a common mode preamplifier (44) and the comparative signal comprises a common mode signal.

3. The detector of claim 2 further comprising a high pass filter (88) configured to receive the common mode signal from the magnetoresistive head elements (50,52), the high pass filter (88) being configured to remove low frequency transients.

4. The detector of claim 3 further comprising a window comparator (56) having an upper and a lower threshold configured as references against which a processed signal of a thermal asperity is compared as a means of discriminating a minimum amplitude thermal asperity that is recognized, to create an active output.

5. The detector of claim 4 wherein the window comparator (56) produces an output signal active when the absolute magnitude of the thermal asperity signal is above a programmable threshold, and further comprising a diagnostic instrument (63) configured to receive the signal as a trigger responsive to the occurrence of a thermal asperity.

6. The detector of claim 5 wherein the preamplifier (44) further comprises a counter (62) constructed and arranged to count the occurrence of thermal asperities.

7. The detector of claim 6 further comprising a semiconductor chip (47) having a serial data communication interface (94), wherein the input preamplifier (44) is formed from the semiconductor chip (47) as a monolithic construction, and the counter (62) is readable through the serial interface (94) of the chip (47).

8. The detector of claim 1 wherein the discriminating circuit (44) comprises a differential input preamplifier (144) and the comparative signal comprises a differential signal.

9. The detector of claim 9 further comprising a window comparator (156) having an upper and a lower threshold configured as references against which a processed signal of a thermal asperity is compared as a means of discriminating a minimum amplitude thermal asperity that is recognized, to create an active output.

The detector of claim 1 wherein the dual stripe magnetoresistive head (38) further comprises an inductive write head element (48).

The detector of claim 1 wherein the read signals and the common mode signal comprise voltage signals.

HOST CONTROLLER
PREAMP
10
11
12
13
14
15
16
17
18
19
20
21
22
24
27
28
30
32
34
36
38
40
44
45
47

HUS
RDX
RDY
OSCILLOSCOPE
63
44
Fig 2
KWX
KWY
WRITE DRIVER CKTS
54
WDIX
WDIY
HUS
66
HEAD UNSAFE DETECTOR
62
COUNTER
PREAMP INTERFACE
SEN
SCLK
SDATA
R/WN
VCC
GND
RDX
RDY
38
58
Vcc
THERMAL ASPERITY DETECTOR
42
48
70
72
59
56
60
50
KRX
53
64
65
KGR
53
KRY
52
A1
68

HUS
RDX
RDY
OSCILLOSCOPE
63
44
KWX
KWY
WRITE DRIVER CKTS
WDIX
WDIY
54
HUS
HEAD UNSAFE DETECTOR
66
74
78
82
88
90
76
78
84
105
80
58
86
106
COUNTER
62
PREAMP INTERFACE
SEN
SCLK
SDATA
R/WN
94
38
42
48
Vcc
72
108
116
102
104
98
92
110
100
112
114
56
60
VCC
GND
50
53
KRX
KGR
KRY
70
53
52
59
A1
68
RDX
RDY

HUS
RDX
RDY
OSCILLOSCOPE
63
144
KWX
KWY
WRITE DRIVER CKTS
54
WDIX
WDIY
HUS
SEN
SCLK
SDATA
R/WN
94
VCC
GND
RDX
RDY
RDX
124
122
66
RDY
64
124
120
84
LOW PASS FILTER
105
86
106
118
HEAD UNSAFE DETECTOR
66
COUNTER
62
PREAMP INTERFACE
60
38
42
48
50
53
53
52
KRX
KGR
KRY
Vcc
70
72
108
116
98
102
104
100
110
112
92
114
156
A1
68

European Patent Office

# EUROPEAN SEARCH REPORT

Application Number
EP 96 11 4737

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | IEEE TRANSACTIONS ON MAGNETICS, vol. 27, no. 6, 1 November 1991, NEW YORK, US, pages 4503-4508, XP000257368 KLAASSEN K B: "MAGNETIC RECORDING CHANNEL FRONT-ENDS" * page 4507,left-hand column,line 1-9 * * page 4508, right-hand column, line 4-30 * * figures 9,15 * --- | 1,2,8 | G11B27/36 G11B20/18 G01B7/34 G01R33/12 G11B5/39 |
| A | PATENT ABSTRACTS OF JAPAN vol. 095, no. 006, 31 July 1995 & JP 07 057204 A (HITACHI LTD), 3 March 1995, * abstract * * &JP 07 057204: figure 3 and 4 * --- | 1,8,10 | |
| A | EP 0 353 852 A (IBM CORPORATION) * column 6, line 18 - line 47; figure 6 * --- | 1,6 | |
| | | | TECHNICAL FIELDS SEARCHED (Int.Cl.6) |
| A | IBM TECHNICAL DISCLOSURE BULLETIN, vol. 34, no. 7B, 1 December 1991, pages 11-13, XP000282484 "SLIDER-DISK ASPERITY HIT DETECTOR" * the whole document * --- | 1,6 | G11B G01B G01R |
| A | US 5 233 482 A (GALBRAITH ET AL.) * column 5, line 21 - column 6, line 25; figure 13 * --- | 1 | |
| P,A | US 5 537 034 A (LEWIS) * the whole document * --- | 1 | |
| A | EP 0 348 027 A (HEWLETT-PACKARD COMPANY) * the whole document * ----- | | |

The present search report has been drawn up for all claims

| Place of search | Date of completion of the search | Examiner |
|---|---|---|
| THE HAGUE | 22 April 1997 | Daalmans, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)